# EUROPÄISCHE PATENTANMELDUNG

(11) **EP 0 893 717 A2**
(43) Veröffentlichungstag der Anmeldung: **27.01.1999**
(21) Anmeldenummer: 98108995.6
(22) Anmeldetag: 18.05.1998
(51) Int. Cl.: G02B 6/38

(54) **Verfahren zum Herstellen einer metallischen Endhülse für ein flexibles faseroptisches Lichtleitkabel**

(30) Priorität: 25.07.1997 DE 19732051
(71) Anmelder: Schott Glas, 55122 Mainz (DE); CARL-ZEISS-STIFTUNG trading as SCHOTT GLASWERKE, 55122 Mainz (DE)
(72) Erfinder: Klausmann, Christoph, 55263 Wackernheim (DE); Eis, Wolfgang, 65527 Oberjosbach (DE); Dressler, Sigurd, 65195 Wiesbaden (DE)

(57) **Zusammenfassung**

Verfahren zum Herstellen einer metallischen Endhülse für ein flexibles aus einem Faserbündel bestehendes faseroptisches Lichtleitkabel (Faserendhülse), wobei das Kabel in eine Metallhülse eingeführt und die Metallhülse anschließend durch Magnetimpulsformung auf das Faserbündel aufgepreßt wird.

## Beschreibung

Gegenstand der Erfindung ist ein Verfahren zum Herstellen einer metallischen Endhülse für ein flexibles, aus einem Faserbündel bestehendes, faseroptisches Lichtleitkabel. Derartige Endhülsen werden auch kurz Faserendhülsen genannt.

Unter einem flexiblen faseroptischen Lichtleitkabel ist ein Kabel zu verstehen, das innerhalb einer äußeren Umhüllung eine einzelne bzw. eine Vielzahl von optischen zusammengebündelten Fasern enthält. Es können beispielsweise mehrere hundert Einzelfasern in solche einem Lichtleitkabel enthalten sein. In einem kompletten Übertragungssystem ist es notwendig, derartige Kabel sowohl untereinander als auch mit Geräten zu koppeln. Das Lichtleitkabel, auch faseroptisches Bündel genannt, muß daher durch ein optisches Kopplungsglied abgeschlossen werden. Ein faseroptisches Lichtleitkabel ist daher im allgemeinen mittels einer Endhülse abgeschlossen.

Aus DE 36 20 368 C2 ist es bekannt, einen Glasrohrabschnitt auf das Ende eines Lichtleitfaserbündels aufzuschieben, dieses Glasrohrabschnitt über eine definierte Länge durch Erhitzen zu schmelzen und dadurch unter Kollabieren des Glasrohres auf das Faserbündel aufzuschrumpfen. Mit diesem Verfahren werden sehr gute Faserendhülsen erzeugt, nachteilig an dem Verfahren ist jedoch seine technisch außerordentlich anspruchsvolle und zeitraubende Durchführung.

Aus GB 1 595 163 ist die Herstellung einer Faserendhülse aus thermoplastischem Kunststoff bekannt, bei der eine Hülse aus einem geeignet geformten, thermoplastischen und thermisch verschweißbaren Kunststoff unter Anwendung von Druck auf das Faserbündelende aufgeschrumpft und gleichzeitig mit der Hülle des Lichtleitkabels verschweißt wird. Nachteilig an einer solchen Faserendhülse ist ihre geringe thermische Beständigkeit.

Aus US 3 681 164 ist eine metallische Faserendhülse bekannt, bei der das Ende des Faserbündels mittels eines anorganischen silikatischen Zements, eines Glaslots oder eines Litharge (PbO)-Glycerin-Zements mit der Hülse verkittet bzw. verklebt ist. Bei diesem Einkitten oder Einkleben des Faserbündels in eine Hülse (auch das Einkleben mittels anderer organischer Klebstoffe, z. B. Epoxidharz, ist bekannt) muß sehr große Sorgfalt an den Tag gelegt werden und es ist nur mit geschultem Personal möglich, qualitativ gute Faserendhülsen zu erzeugen. Darüber hinaus besteht der Nachteil, daß auch dieses Verfahren sehr zeitaufwendig ist und darüber hinaus eine vollständige Fluchtung zwischen den einzelnen Fasern häufig nicht möglich ist, wodurch als Folge ein Lichtverlust über das gekoppelte Paar von solchen Endhülsen auftreten kann.

Diese Aufgabe der Erfindung besteht darin, ein Verfahren zum Herstellen einer metallischen Endhülse für ein flexibles faseroptisches Lichtleitkabel zu finden, das einfach durchzuführen ist und das ohne Einkitten oder Einkleben des Faserbündels auskommt.

Die Aufgabe wird durch das in Patentanspruch 1 beschriebene Verfahren gelöst.

Erfindungsgemäß wird die Metallhülse auf das Lichtleitfaserbündel, insbesondere auf sein Ende, mittels des Magnetimpulsverfahrens aufgepreßt. Die Magnetimpulsformung ist eine seit den 60er Jahren bekannte Umformtechnik, die auch als Schnelle Magnetische Umformung (SMU), als Magnetumformung oder als elektromagnetische Formgebung bezeichnet wird. Die Magnetimpulsformung ist ein elektro-dynamisches Hochgeschwindigkeitsumformverfahren, bei dem metallische Werkstücke mit Hilfe starker, berührungslos wirkender Magnetfeldstöße kaltgeformt werden. Bei dem Verfahren fließt ein Kondensator-Entladestrom in eine Zylinderspule, die die aufzupressende Hülse enthält. Die auf das Werkstück wirkenden Kräfte sind radial nach innen gerichtet und pressen die Hülse zusammen bzw. auf das in der Hülse befindliche Ende des Lichtleitfaserbündels. Geeignete Vorrichtungen sind beispielsweise in DE-AS 14 64 646 in DD-PS 104922 oder in FR-PS 2 632 218 beschrieben. Eine Beschreibung des Verfahrens an sich findet sich in W. Dahl, Umformtechnik, Plastomechanik und Werkststoffkunde, Springer Verlag, Berlin, Hamburg, New York, 1993, Seiten 916-921. Vorrichtungen zu Magnetimpulsformung sind im Handel erhältlich (z. B. Fa. Maxwell, USA).

Die Erfindung wird anhand der Abbildung näher erläutert. Hierbei zeigen
- Fig. 1-6:: schematisch das Herstellungsverfahren in Teilschritten
- Fig. 7-10:: eine weitere Ausführungsform
- Fig. 11:: grob schematisch eine Vorrichtung zur Magnetimpuls-Formung
- Fig. 12:: den Schnitt nach II-II der Figur 2
- Fig. 13 - 17:: die Anfertigung zweier Endhülsen in einem Arbeitsgang

In den Figuren besitzen gleiche Teile dieselben Bezugsziffern.

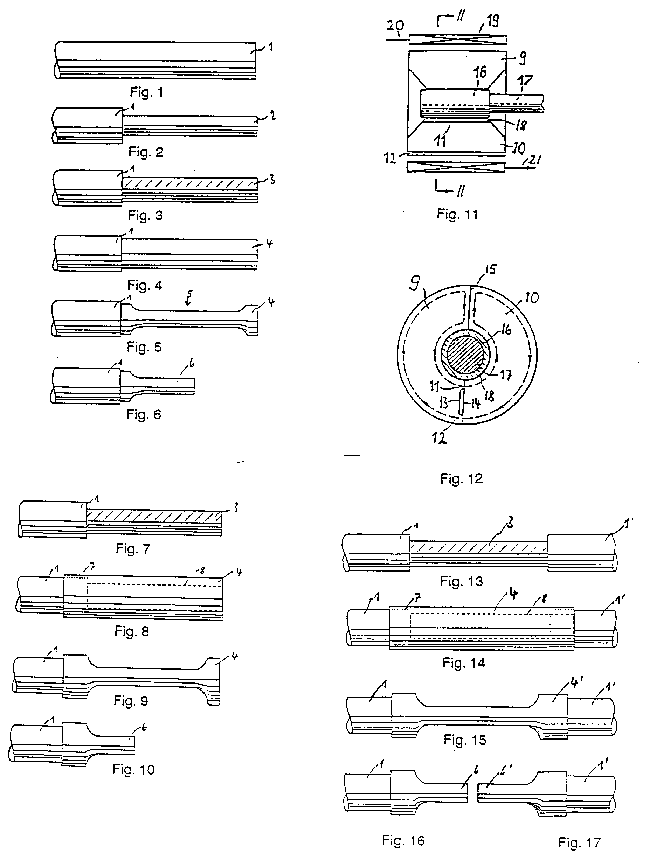

In Figur 1 ist das Ende eines Glasfaserkabels, bestehend aus der äußeren Umhüllung 1 und dem innenliegenden Faserbündel dargestellt. Zur Aufbringung der Hülse wird die äußere Umhüllung 1 teilweise entfernt und das Faserbündel 2 freigelegt (Fig. 2).

Auf dieses Faserbündel 2 kann nunmehr die aufzuschrumpfende Metallhülse aufgeschoben werden. Bevorzugt ist es aber, das Faserbündel zunächst mit einer Schicht eines elastischen Materials zu umgeben. Die Umhüllung des Faserbündels mit einer Schicht aus elastischem Material hat den Vorteil, daß eine beständige Rückstellkraft zwischen Hülse und Faserbündel erzeugt wird. Als elastisches Material können alle Stoffe mit diesen Eigenschaften Verwendung finden, z. B. Gummi, Natur- und Sythesekautschuk, Chlorkautschuk, Cyclokautschuk, Styrol-Butadien-Copolymere (SBR), Acryl-Butadien-Copolymere (NBR), Butylkautschuk, Polyolefine, Polyurethlane, Fluorelastomere wie Vinylidenfluorid- und Chlortrifluorethylen-Copolymerisate, Acrylkautschuk, Polychloroprene, Polysulfide, Siliconkautschuk, Polytetrafluorethylen usw. Das Material wird als Folie oder Band um das freigelegte Faserbündel gewickelt, kann aber auch als Schicht, z. B. als Suspension aufgebracht werden. Es ist aber auch möglich, das Material als Innenbeschichtung der aufzuschrumpfenden Metallhülse vorzusehen. Weiterhin kann die äußere Umhüllung der Faser bzw. des Faserbündels, sofern sie elastische Eigenschaften hat, als elastische Umhüllung dienen. In diesem Falle ist es nicht notwendig, die äußere Umhüllung zu entfernen. Allerdings ist die äußere Umhüllung im allgemeinen verhältnismäßig dick, da sie ja die innenliegende Faser bzw. das Faserbündel vor Verletzungen durch Schäden von außen bzw. durch Knicken schützen muß. Sind besonders schlanke Endhülsen erwünscht, wird die äußere Umhüllung im allgemeinen entfernt. Die Umwicklung des Faserbündels mit einem Band oder einer Folie wird bevorzugt, da dadurch das Faserbündel zusammengehalten wird, was das Aufschieben der Hülse erleichtert. Die Umhüllung des Faserbündels mit dem Material soll etwa 0,05 bis 1 mm stark sein. Bevorzugt wird eine Umhüllung mit einer Stärke von 0,05 bis 0,2 mm, was sich leicht durch ein- oder mehrlagiges Umwickeln des Faserbündels mit einem entsprechenden Kunststoffband erreichen läßt. Die Auswahl eines geeigneten Kunststoffs erfolgt in erster Linie nach den Anforderungen an die Temperaturbeständigkeit der Faserendhülse. Bei höheren Anforderungen kommen Bänder, Folien oder Beschichtungen aus Fluorkohlenstoffharzen, insbesondere Polytetrafluorethylen (PTFE) zu Einsatz. Mit Vorteil können auch solche, häufig Fluorkohlenstoffharze enthaltenden, Bänder Verwendung finden, wie sie im Wasser-Installationshandwerk anstelle der früher üblichen Hanf-Fasern zur Abdichtung von Schraubverbindungen heutzutage eingesetzt werden.

In Fig. 3 ist das Ende eines Glasfaserkabels gezeigt, bei dem das Glasfaserbündel mit einem Teflonband umwickelt und zusammengehalten wird. Das Teflonband wurde überlappend gewickelt und hatte eine Breite von 10 mm sowie eine Stärke von 0,03 mm.

In Fig. 4 ist auf das gemäß Fig. 3 umwickelte Ende des Glasfaserbündels nunmehr die aufzuschrumpfende Metallhülse 4 aufgeschoben.
Als Metall für die Metallhülse kommen alle ausreichend duktilen Metalle und Metallegierungen in Frage, d. h. solche Metalle, die sich entsprechend verformen lassen. Als Metalle bevorzugt werden Aluminium und seine Legierungen, Kupfer und seine Legierungen, insbesondere Messing und Bronze, Eisen, Stahl, Edelstahl, Nickel und seine Legierungen. Besonders geeignet wegen der guten elektrischen Leitfähigkeit ist Aluminium und seine Legierungen sowie Kupfer und seine Legierungen. Weniger gut leitfähige Metalle bzw.- Legierungen stellen bekanntermaßen höhere Anforderungen an die Umformapparatur. Falls die Hülse aus einem Metall bzw. einer Legierung, z. B. Edelstahl besteht, das aufgrund seiner geringeren elektrischen Leitfähigkeit schwieriger zu verformen ist, ist es üblich, die Hülse mit einer Schicht gut leitfähigen Metalls, z. B. Aluminium oder Kupfer zu umgeben. Es ist für diesen Zweck bereits bekannt, den zu verformenden Gegenstand mit einer Aluminium Folie zu umgeben. Im vorliegenden Fall genügen wenige (1 bis 3) Windungen aus einer Aluminiumfolie einer Stärke von ca. 0,03 mm, wie sie auch in Haushalten zum Einwickeln von Lebensmitteln benutzt wird. Das Umwickeln mit einer 0,03 bis 0,1 mm starken Schicht aus Aluminium- oder Kupferfolie stellt die einfachste Methode dar. Nach dem Verformen kann die Folie wieder entfernt werden.

Die Metallhülsen werden üblicherweise mit einer Wandstärke von 0,1 bis 3 mm verwandt. Für den vorliegenden Zweck am geeignetsten sind Aluminium-Hülsen (Rohrabschnitte), da sie sich besonders leicht verformen lassen. Die Metall-Hülsen lassen sich sehr weitgehend verformen. Für ein ökonomisches Verfahren ist es jedoch zweckmäßig, wenn die Hülsen einen Innendurchmesser besitzen, der ca. 0,5 bis 1 mm größer ist als der Außendurchmesser der Faser bzw. des Faserbündels, auf den das Rohr aufgepreßt werden soll. Innerhalb dieses Bereichs hat die Hülse genug Spiel, um leicht auf das Faserbündel aufgeschoben werden zu können, zum anderen ist die zu leistende Verformungsarbeit gering genug, um innerhalb kürzester Zeit die Verformung beenden zu können. Schiebt man die Metallhülse so weit auf das Kabel auf, daß sie an einer Stelle ist, wo das Kabel getrennt werden muß, so können zwei Endhülsen in einem Arbeitsgang erzeugt werden.

Nachdem die Metallhülse 4 auf das Faserbündel aufgeschoben ist, wird sie in einer Anlage zu Magnetimpulsverfromung auf das Faserbündel aufgepreßt. In Fig. 5 ist die Metallhülse 4 gezeigt, die im Bereich 5 auf das Faserbündel 2 bzw. das mit PTFE-Band 3 umwickelte Ende des Faserbündels aufgepreßt ist.

In Fig. 5 ist eine Ausführungsform gezeigt, in der nur der mittlere Bereich der Metallhülse 4 verformt ist. Zur Herstellung der Faserendhülse wird wie in Fig. 6 dargestellt, der überflüssige Teil der aufgepreßten Metallhülse abgeschnitten und das Ende der so erzeugten Faserendhülse 6 in an sich bekannter Weise endflächenbearbeitet.

In den Fig. 7 bis 10 wird eine weitere Ausführungsform analog den Figuren 3 bis 6 gezeigt mit dem Unterschied, daß die Metallhülse vor dem Verformen noch eine Strecke über die äußere Umhüllung geschoben ist, wie das in Fig. 8 gezeigt ist. Ziffer 7 zeigt gestrichelt das unter der Metallhülse verborgene Ende der Umhüllung 1, Ziffer 8 zeigt ebenfalls gestrichelt das unter der Metallhülse verborgene, mit dem PTFE-Band 3 umwickelte Ende des Faserbündels. Nach dem MagnetimpulsUmformen ist die Metallhülse 4 sowohl mit der Ummantelung 1 des Faserbündels als auch mit dem Faserbündel selbst verbunden, wie in Fig. 9 dargestellt, wodurch sich eine besonders zugfeste Faserendhülse gemäß Fig. 10 ergibt.

In den Figuren 13 bis 17 wird die Herstellung zweier Endhülsen in einem Arbeitsgang analog den Figuren 7 - 10 gezeigt. Das Faserkabel wird von seiner äußeren Umhüllung befreit und das freigelegte Faserbündel mit einem Elastomerband 3 umwickelt. Danach wird die Metallhülse 4 über die beiden Enden des Kabelmantels 1 und 1' geschoben und umgeformt, wie in Figur 15 dargestellt. Nach dem Trennen erhält man zwei Endhülsen 6 und 6' (Figuren 16 und 17). Die Herstellung zweier Endhülsen in einem Arbeitsgang ist besonders wirtschaftlich.

Fig. 11 und 12 zeigen einen bekannten zerlegbaren Magnetfeldkonzentrator, der aus zwei Teilen 9 und 10 besteht. Der elektrische Kontakt zwischen den Teilen 9 und 10 des zerlegbaren Magnetfeldkonzentrators entsteht durch gegenseitige Berührung der Vorsprünge 11 und 12, die von der Aussparung 13 in Teil 9 des zerlegbaren Konzentrators gebildet sind und der Stirnfläche 14 des Konzentratorteils 10. An der unteren Seite ist zwischen den verbundenen Teilen 9 und 10 des zerlegbaren Konzentrators eine an den Teil 9 angeklebte Isolierzwischenlage 15 vorgesehen.

In den zerlegbaren Magnetfeldkonzentrator wird ein Faserbündel 17 mit aufgeschobener Metallhülse 16 aus Aluminium eingeführt, wobei die Aluminiumhülse 16 auf das Faserbündel aufzupressen ist. Die Aluminiumhülse 16 wird von den Teilen 9 und 10 des zerlegbaren Konzentrators mit Hilfe einer elastischen Hülse 18 isoliert, die längs ihrer Seitenlinie aufgeschnitten ist und infolgedessen leicht aufgesetzt und abgezogen werden kann. Der zerlegbare Magnetfeldkonzentrator wird mitsamt der eingelegten Aluminiumhülse 16 und dem Faserbündel 10 in eine elektrische Wicklung 19 gesetzt, die mit Anschlüssen 20 und 21 versehen ist. Die Arbeitsweise eines solchen Magnetfeldkonzentrators ist wie folgt:

Ein Stromimpuls wird den Anschlüssen 20 und 21 der Wicklung 19 zugeführt, deren Magnetfeld im zerlegbaren Magnetfeldkonzentrator Ströme in der in Fig. 2 mit Pfeilen angegebenen Richtung induziert. Beim Vorhandensein der Aussparung 13 im Teil 9 des zerlegbaren Konzentrators fließen diese Ströme durch den Vorsprung 11 und die Fläche 14 in der Nähe der Öffnung mit der eingeführten Aluminiumhülse 16 und dem Faserbündel 17. Das in der Öffnung des zerlegbaren Konzentrators entstehende impulsartige Magnetfeld preßt die Aluminiumhülse 16 an das Faserbündel 17 an. Da die Ströme aus den Teil 9 in den Teil 10 des zerlegbaren Konzentrators nahe der Öffnungsfläche fließen, wir der Magnetdruck auf die Aluminiumhülse 10 gleichmäßig verteilt, wodurch das Anpressen sehr gleichmäßig und mit hoher Qualität erfolgt.

Bei Induktoranordnungen mit zerlegbaren Magnetfeldkonzentratoren wie in Fig. 11 und 12 gezeigt, müssen Mittel vorgesehen werden, die das aneinanderpressen der Teile 9 und 10 des zerlegbaren Konzentrators und damit eine sichere elektrische Kontaktabgabe ermöglichen. Diese Mittel sind in der schematischen Darstellung der Figuren 11 und 12 jedoch nicht gezeigt. Es ist ferner vorteilhaft, wenn die Kontaktflächen der Kontzentratorteile 9 und 10 mit einer Stoffschicht überzogen sind, die eine hohe elektrische Leitfähigkeit und eine gute Korrosionsbeständigkeit aufweist.

Es ist außerordentlich überraschend, daß trotz der bei der Magnet-Impulsformung auftretenden hohen Kräfte von bis zu 500 Mpa und der hohen Wandgeschwindigkeiten von bis zu 300 m pro Sekunde eine Metallhülse auf eine Faser oder ein Faserbündel aufgepreßt werden kann, ohne daß die empfindlichen Glasfasern dabei Schaden erleiden. Die für das Aufpressen erforderliche Impulsstärke kann von jedem Fachmann anhand weniger Versuche leicht gefunden und optimiert werden. Mit dem Verfahren lassen sich auf schnelle und einfache Weise sehr zuverlässige metallische Faserendhülsen herstellen. Nach dem Abtrennen des überflüssigen Teils der Aluminiumhülse braucht das Ende der Faserendhülse nur noch poliert zu werden, was durch die nichtvorhandene bzw. durch die Umwicklung nur in geringem Maße vorhandenen organische Substanz sehr erleichtert wird, im Gegensatz zu den herkömmlichen metallischen Faserendhülsen, in die das Faserbündel mittels eines organischen Klebers eingekittet ist. Das Vorhandensein größerer Mengen organischer Substanz übt nämlich beim Polieren eine Schmierwirkung aus, so daß das Polieren verhältnismäßig aufwendig und langwierig wird. Wird die Hülse auf einer Trennstelle des Faserkabels angebracht, so entstehen beim Trennen zwei Faserendhülsen. Bei dieser Verfahrensweise wird die Aluminiumhülse optimal ausgenutzt. Es entsteht kein Abfall.

## Patentansprüche

1. Verfahren zum Herstellen einer metallischen Endhülse für ein flexibles aus einem Faserbündel bestehendes faseroptisches Lichtleitkabel (Faserendhülse)
**dadurch gekennzeichnet,**
daß das Kabel in eine Metallhülse eingeführt und die Metallhülse anschließend durch Magnetimpulsformung auf das Faserbündel aufgepreßt wird.

2. Verfahren nach Anspruch 1,
**dadurch gekennzeichnet,**
daß das Ende des Kabels in die Metallhülse eingeführt und die Metallhülse anschließend im Bereich der Endhülse auf das Faserbündel aufgepreßt wird.

3. Verfahren nach Anspruch 1,
**dadurch gekennzeichnet,**
daß vor der Verformung zwischen Metallhülse und Glasfaserbündel eine Schicht aus plastischem oder elastischem Kunststoffmaterial angeordnet wird.

4. Verfahren nach Anspruch 1 oder 2,
**dadurch gekennzeichnet,**
daß die Schicht durch Umwickeln des Glasfaserbündels mit einem Band oder einer Folie aus dem Kunststoff-Material erzeugt wird.

5. Verfahren nach Anspruch 3,
**dadurch gekennzeichnet,**
daß die Schicht durch Beschichtung der inneren Oberfläche der Metallhülse mit dem Kunststoffmaterial erzeugt wird.

6. Verfahren nach Anspruch 3,
**dadurch gekennzeichnet,**
daß man eine Folie oder ein Band mit einem Gehalt an Fluorkohlenstoff-Polymeren oder an Polyäthylen verwendet.
